# EUROPEAN PATENT SPECIFICATION

(11) **EP 2 282 259 B1**
(45) Date of publication and mention of the grant of the patent: **01.05.2019**
(21) Application number: 10171049.9
(22) Date of filing: 28.07.2010
(51) Int. Cl.: G06F 3/048, G06F 3/0488, G06F 3/0484

(54) **User interface method used in web browsing, electronic device for performing the same and computer readable recording medium thereof**
Benutzerschnittstellenverfahren beim Web-Browsing, elektronische Vorrichtung zur Durchführung davon und computerlesbares Aufzeichnungsmedium damit
Procédé d'interface utilisateur utilisé pour naviguer sur Internet, dispositif électronique pour le réaliser et support lisible sur ordinateur correspondant

(30) Priority: 05.08.2009 KR 20090072113
(43) Date of publication of application: 09.02.2011
(73) Proprietor: Samsung Electronics Co., Ltd., Suwon-si, Gyeonggi-do, 443-742 (KR)
(72) Inventor: Moon, Kwan-kyung, Daegu (KR); Choi, Ko-eun, Gyeonggi-do (KR)
(74) Representative: HGF Limited

(56) References cited:
- US-A1- 2003 016 253
- US-A1- 2007 130 525
- US-A1- 2008 165 141
- US-A1- 2008 168 388

## Description

### BACKGROUND OF THE INVENTION

### 1. Field of the Invention

The present invention relates generally to a User Interface (Ul) for web browsing, and more particularly, to a UI method based on a touch interface for web browsing, an electronic device for executing the method, and a computer readable recording medium storing a computer readable program for executing the method.

### 2. Description of the Related Art

Recently, developments in the pursuit of user convenience have resulted in an increase in the number of electronic devices with web browsing capabilities, which include a UI based on a touch interface implemented through a touch screen or a touch pad. Electronic devices that have small screens, such as mobile devices, require more efficient UI functions than UI functions of electronic devices that have larger screens.

Web browsing through a touch interface-based UI may be performed by touching a displayed web page with a finger or a stylus pen. The displayed web page can include a specific event processing area such as a specific object or a specific content area having a dynamic change. For example, web content for services such as GOOGLE® Maps, GOOGLE® Calendar, and GMAIL® can be displayed on the specific event processing area. The specific object may be HyperText Markup Language (HTML) or Extensible Hypertext Markup Language (XHTML), Cascading Style Sheet (CSS), Javascript, a picture, a moving picture such as flash. The specific event is a message provided by an application program for a specific purpose, such as GOOGLE® Maps, GOOGLE® Calendar, and GMAIL®.

However, in browsing a web page including a specific event processing area using a UI based on a touch interface, a user is not informed of whether a touch-based input is processed as an event of a web page or an event of the specific event processing area.

US2007/0130525 A1 discloses a method of filtering a web page or other computing file, wherein a web page is analyzed and segmented into regions or segments. At least one of the regions is selected for display. Selected regions are manipulated to enhance the visibility of preferred regions of the web page. In one embodiment, the manipulation comprises presenting the image of the page in accordance with a selected mathematical transform.

### SUMMARY OF THE INVENTION

The present invention provides a User Interface (UI) method by which a user can know whether an input by a touch is processed as an event of a web page or an event of a specific event processing area included in the web page when performing web browsing using a UI based on a touch interface, an apparatus for executing the method, and a computer readable recording medium storing a computer readable program for executing the method.

According to an aspect of the present invention, there is provided a UI method based on a touch interface. The method includes receiving, when performing web browsing in an electronic device, a web page; determining one or more areas of the web page as one or more specific event processing areas, characterised in that when a specific event processing area is a selected area, a user input can be performed in the specific event processing area and the input signal is processed based on a user's touch on the specific event processing area as an event of the specific event processing area, and wherein, when a specific event processing area is an unselected area, user input cannot be performed in the specific event processing area and the input signal is processed based on a user's touch on the specific event processing area as an event of the web page; and the method further includes displaying, as a first screen, the web page and the one or more specific event processing areas as unselected specific event processing areas, wherein the one or more specific event processing areas are distinguished from the remainder of the web page; and displaying a second screen in which at least one of the one or more specific event processing areas is displayed as a selected area, if a selection signal corresponding to the at least one specific event processing area is received, wherein a display status of a selected area specific event processing is different from a display status of an unselected specific event processing area.

According to another aspect of the present invention, there is provided an electronic device including a web browsing function. The electronic device includes a display unit for displaying a web page; a User Interface, UI, unit based on a touch interface; and a controller configured to receive, when performing web browsing, a web page; determine one or more areas of the web page as one or more specific event processing areas, characterised in that, when a specific event processing area is a selected area, a user input can be performed in the specific event processing area and the controller processes the input signal based on a user's touch on the specific event processing area as an event of the specific event processing area, and wherein, when a specific event processing area is an unselected area, user input cannot be performed in the specific event processing area and the controller processes the input signal based on a user's touch on the specific event processing area as an event of the web page; and the controller is further configured to display, on the display unit, as a first screen the web page and the one or more specific event processing areas as unselected specific event processing areas, wherein the one or more specific event processing areas are distinguished from the remainder of the web page, and, if a selection signal corresponding to the at least one specific event processing area is received from the UI unit, display a second screen in which at least one of the one or more specific event processing areas is displayed as a selected area on the display unit, wherein a display status of a selected area specific event processing is different from a display status of an unselected specific event processing area.

According to another aspect of the present invention, there is provided a computer readable recording medium storing a computer readable program for executing a User Interface method based on a touch interface. The method includes receiving, when performing web browsing in an electronic device, a web page; determining one or more areas of the web page as one or more specific event processing areas, characterised in that when a specific event processing area is a selected area, a user input can be performed in the specific event processing area and the input signal is processed based on a user's touch on the specific event processing area as an event of the specific event processing area, and wherein, when a specific event processing area is an unselected area, user input cannot be performed in the specific event processing area and the input signal is processed based on a user's touch on the specific event processing area as an event of the web page; and the method further includes displaying, as a first screen, the web page and the one or more specific event processing areas as unselected specific event processing areas, wherein the one or more specific event processing areas are distinguished from the remainder of the web page; and displaying a second screen in which at least one of the one or more specific event processing areas is displayed as a selected area, if a selection signal corresponding to the at least one specific event processing area is received, wherein a display status of a selected area specific event processing is different from a display status of an unselected specific event processing area.

### BRIEF DESCRIPTION OF THE DRAWINGS

The above and other features and advantages of the present invention will become more apparent by describing in detail embodiments thereof with reference to the attached drawings in which:
FIG. 1 is a functional block diagram of an electronic device capable of web browsing, according to an embodiment of the present invention;
FIG. 2 is a diagram illustrating a screen of a web page including a specific event processing area;
FIG. 3 is a diagram illustrating a screen in which a specific event processing area included in a web page is represented as a selected area;
FIG. 4 is a diagram illustrating a screen in which an entire view port of a display unit of FIG. 1 is represented as an unselected specific event processing area;
FIG. 5 is a diagram illustrating a screen in which an entire view port of a display unit of FIG. 1 is represented as a selected specific event processing area;
FIG. 6 is a flowchart of a User Interface (UI) method based on a touch interface, according to an embodiment of the present invention;
FIG. 7 is a flowchart of a UI method based on a touch interface, according to another embodiment of the present invention; and
FIG. 8 is a flowchart of a UI method based on a touch interface, according to another embodiment of the present invention.

### DETAILED DESCRIPTION OF EMBODIMENTS OF THE INVENTION

The present invention will now be described more fully with reference to the accompanying drawings, in which embodiments of the invention are shown.

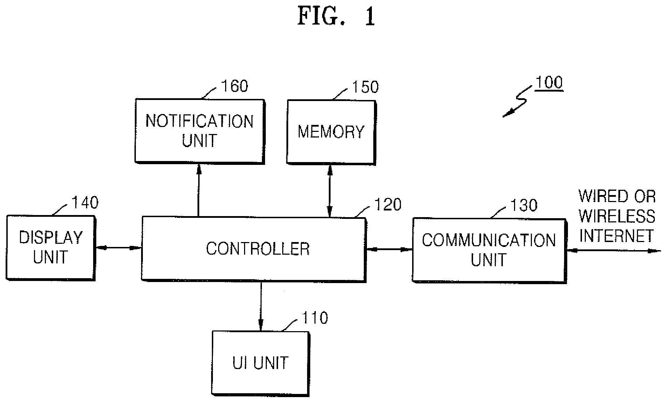

FIG. 1 is a functional block diagram of an electronic device 100 having web browsing capabilities, according to an embodiment of the present invention. The electronic device 100 can receive and display a web page provided by a web site by accessing the Internet through a wired or wireless connection. Examples of electronic devices 100 according to embodiments of the present invention include a Personal Computer (PC), a mobile device, and an Internet Protocol Television (IPTV). Examples of a mobile device according to embodiments of the present invention include a portable device such as a cellular phone, a smartphone, an iPhone, a Personal Digital Assistant (PDA), a Portable Multimedia Player (PMP), a navigation system, and a game player. The electronic device may also be a digital broadcasting terminal including IPTV functions within a mobile device.

The electronic device 100 illustrated in FIG. 1 can include a User Interface (UI) unit 110, a controller 120, a communication unit 130, a display unit 140, a memory 150, and a notification unit 160. However, the elements illustrated in FIG. 1 are provided as examples and are not all required in an electronic device according to embodiments of the present invention. Electronic devices according to embodiments of the present invention may have fewer elements than those in the electronic device illustrated in FIG. 1, and/or may include additional elements not illustrated in the electronic device 100.

The UI unit 110 can be constructed based on a touch interface. More specifically, a web browsing command can be input based on a touch interface using a touch panel or a touch screen for generating an input signal (or input data) according to a contact position of a finger or a stylus pen. For example, by using the UI unit 110, a web browsing command for zooming, panning, or scrolling a web page displayed on the display unit 140 or selecting or de-selecting at least one specific event processing area included in the web page can be input based on a touch interface. The UI unit 110 can also be combined with the display unit 140 in the form of a touch screen display.

The controller 120 controls general operations of the electronic device 100. In particular, the controller 120 can control an operation of the electronic device 100 according to an input signal received from the UI unit 110. If a request for Internet access is received from the UI unit 110, the controller 120 performs corresponding operations described herein while executing a web browser by using an application program of the web browser, which is stored in the memory 150. The web browser may be a mobile web browser.

The controller 120 accesses wired or wireless Internet by controlling the communication unit 130. Accordingly, when the communication unit 130 receives a web page provided from a web site, the controller 120 can display the received web page on the display unit 140 while storing the received web page in the memory 150. Herein, the controller 120 determines, by parsing the received web page, whether the received web page includes at least one specific event processing area. The at least one specific event processing area is a kind of specific object or specific content area having a dynamic change and is an area in which an event is processed by application programs such as JAVASCRIPT®, FLASH®, and ACTIVEX®. For example, services such as service provided by GOOGLE® Maps, GOOGLE® Docs, GOOGLE® Calendar, GMAIL®, , and GOOGLE® Latitude, as well as subway line maps can be provided using the specific event processing area. The term "dynamic change" refers to dynamically changing a size of a specific content area on a web page.

If an area composed of a different programming or scripting language from that used for composing a web page exists in the web page, the controller 120 can determine that the web page includes at least one specific event processing area. For example, if a web page is composed according to Hyper Text Markup Language (HTML), and if a content area composed according to Java Script exists in the web page, the controller 120 can determine that the web page includes at least one specific event processing area. However, the determination of whether a web page includes at least one specific event processing area, which is performed by the controller 120, is not limited to the determination based on a used language as described above. The determination can also be performed according to other properties distinguishing a specific event processing area from a web page.

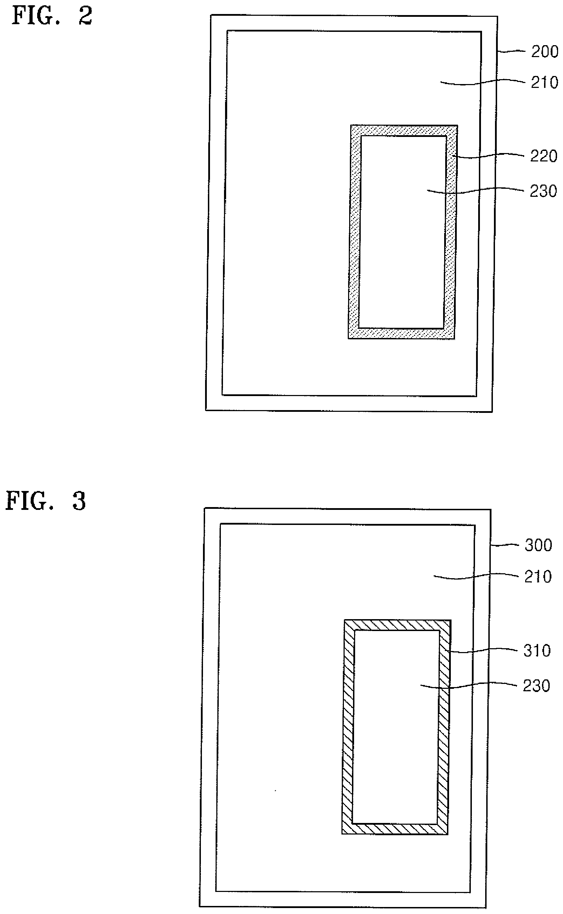

Changes to a screen display in order to indicate that a specific event processing area, or to indicate that the specific event processing area is a selected area is described as follows with reference to FIGs. 2 and 3. FIG. 3 illustrates a screen in which the specific event processing area 230 included in the web page 210 is represented as a selected area. FIG. 2 is a diagram illustrating a screen of a web page including a specific event processing area. FIG. 3 is a diagram illustrating a screen in which a specific event processing area included in a web page is represented as a selected area.

FIG. 2 illustrates a screen 200 of the web page 210 including a specific event processing area 230. If it is determined that the web page includes at least one specific event processing area, the controller 120 can display a web page represented to enable a user to intuitively recognize the at least one specific event processing area when displaying the web page on the display unit 140. For example, as illustrated in FIG. 2, the controller 120 can display a web page screen 200 in which a border line 220 having a specific color is displayed between a web page 210 and a specific event processing area 230.

Alternatively, the controller 120 can display a web page screen without the border line 220, in which a display color of the specific event processing area 230 is different from a display color of the web page 210, on the display unit 140. For example, an area of the web page screen 200 in which the specific event processing area 230 may be displayed in monochrome, while a remainder the web page 210 is displayed in polychrome on the display unit 140. Although the border line 220 and the monochrome/polychrome methods for distinguishing a specific event processing area from a web page in order to enable a user to intuitively recognize the specific event processing area from the web page displayed on the display unit 140 are described in detail for example, the present invention is not limited to these specific methods. Other such methods may be provided to distinguish a specific event processing area from a web page according to embodiments of the present invention.

When the screen 200 displays a first screen of the web page 210 including the specific event processing area 230 on the display unit 140 as shown in FIG. 2, if a selection signal corresponding to the specific event processing area 230 is received from the UI unit 110, the controller 120 displays a second screen representing the specific event processing area 230 as a selected area on the display unit 140.

FIG. 3 illustrates a screen in which the specific event processing area 230 included in the web page 210 is represented as a selected area. As illustrated in FIG. 3, a border line 310 between the web page 210 and the specific event processing area 230 has a different color than a color of the border line 220 in FIG. 2. When the selection signal corresponding to the specific event processing area 230 is received from the UI unit 110, the controller 120 switches from displaying the border line 220 with a first color to the borderline 310 with a second color in order to indicate that the specific event processing area 230 is a selected area on the display unit 140. For example, the color of the border line 220 of FIG. 2 can be displayed as gray and the color of the border line 310 as red.

When a specific event processing area is an unselected area, if the specific event processing area is changed to a selected area while the specific event processing area is displayed in monochrome, the specific event processing area can be displayed in polychrome with colors for distinguishing the specific event processing area it from the web page 210 or with a border line. As described above, display statuses of the specific event processing area 230 in the screen 200 of FIG. 2 and the screen 300 of FIG. 3 are different from each other. More specifically, a display status of a specific event processing area as an unselected area is different from a display status of the specific event processing area as a selected area.

When a specific event processing area is a selected area, a user input can be performed in the specific event processing area. On the other hand, when a specific event processing area is not a selected area, user input cannot be performed in the specific event processing area. Thus, when the screen 200 illustrated in FIG. 2 is displayed, if an input signal based on a user's touch on the specific event processing area 230 is received, the controller 120 processes the input signal as an event of the web page 210. For example, if a zooming signal based on a user's touch from the specific event processing area 230 has been received, the controller 120 zooms the web page 210. In addition, if an input signal based on a user's touch on the web page 210 has been received, the controller 120 processes the input signal as an event of the web page 210. As described above, if the specific event processing area 230 is an unselected area, the controller 120 processes the input signal as an event of the web page 210 regardless of whether an input signal based on a user's touch is received in an area corresponding to the web page 210 or the specific event processing area 230.

In addition, when the screen 300 illustrated in FIG. 3 is displayed, if an input signal based on a user's touch on the specific event processing area 230 has been received, the controller 120 processes the input signal as an event of the specific event processing area 230. For example, if a zooming signal based on a user's touch from the specific event processing area 230 has been received, the controller 120 zooms content of the specific event processing area 230. More specifically, if the zooming signal has been received while GOOGLE® Maps is being displayed on the specific event processing area 230, the controller 120 zooms GOOGLE® Maps within the specific event processing area 230. Herein, the zooming may be achieved with or without a change in the displayed size of the specific event processing area 230.

If an input signal based on a user's touch on the web page 210 is received, the controller 120 processes the input signal as an event of the web page 210. As such, when the specific event processing area 230 is a selected area, if an input signal based on a user's touch on the web page 210 has been received, the controller 120 processes the input signal as an event of the web page 210, and if an input signal based on a user's touch on the specific event processing area 230 has been received, the controller 120 processes the input signal as an event of the specific event processing area 230.

Based on the screen displayed on the display unit 140 according to the operation of the controller 120, a user can intuitively determine whether a web page includes a specific event processing area and whether a user's input based on a touch on the specific event processing area included in the web page is possible.

A plurality of specific event processing areas can be included in a web page. For example, the controller 120 can set a selected area or an unselected area for each of the plurality of specific event processing areas according to a user's input signal from the UI unit 110. Setting a selected area or an unselected area for each of the plurality of specific event processing areas can be performed using a tap function key, which may be implemented as a button that can be tapped according to a tapping motion performed by a user. The function key may be a touch based function key or a function key included in the electronic device 100 apart from the UI unit 110. Alternatively, a specific event processing area can be set as a selected area or an unselected area based on an action such as shaking of the electronic device 100, which may be sensed by a gyro sensor, for example. Setting a selected area or an unselected area for a specific event processing area through use of the tap function key or the method using a gyro sensor are provided as examples, but other means and methods for setting a selected or unselected area may be used according to embodiments of the present invention.

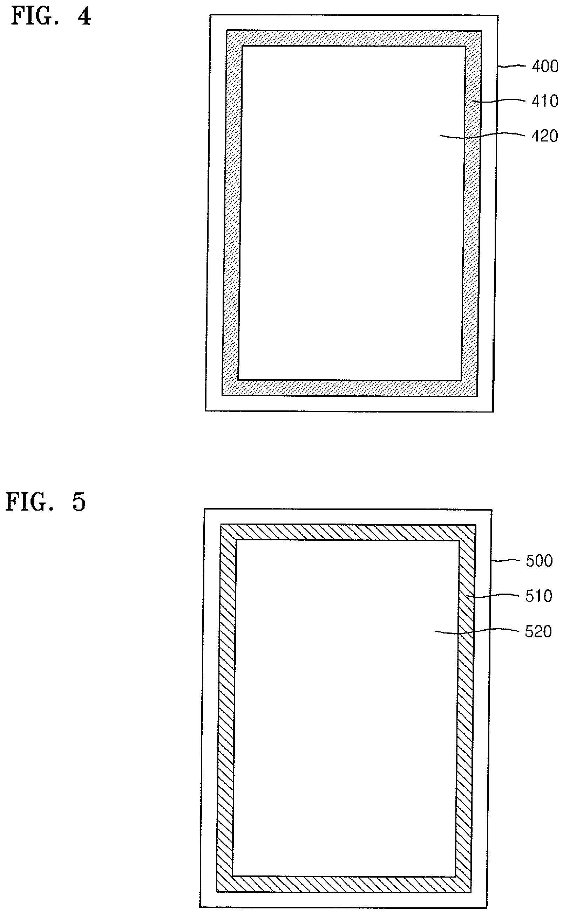

Display of a screen in which an entire view port of a display unit of FIG. 1 includes a selected or unselected specific event processing area is described as follows with reference to FIGs. 4 and 5. FIG. 4 is a diagram illustrating a screen in which an entire view port of a display unit of FIG. 1 is represented as an unselected specific event processing area. FIG. 5 is a diagram illustrating a screen in which an entire view port of a display unit of FIG. 1 is represented as a selected specific event processing area.

If a specific event processing area included in a web page is larger than a view port_of the display unit 140 of the electronic device 100, the controller 120 displays the specific event processing area over the entire view port of the display unit 140. The view port is a display area that can be seen by a user on the display unit 140. Referring to FIG. 4, a screen 400 in which the entire view port of the display unit 140 is represented as an unselected specific event processing area 420. In FIG. 4, border line 410 indicates that a currently displayed screen is the specific event processing area 420 and can be displayed in a manner similar to the border line 220 of FIG. 2. Accordingly, since the specific event processing area 420 illustrated in FIG. 4 is an unselected area, if a user's input signal based on a touch on the specific event processing area 420 is received, the controller 120 processes the input signal as an event of the web page. Thus, if a scroll signal has been received while a screen as illustrated in FIG. 4 is being displayed on the display unit 140, the controller 120 performs scrolling based on a web page.

If a selection signal of a specific event processing area has been received from the UI unit 110 while the screen 400 illustrated in FIG. 4 is being displayed on the display unit 140, the controller 120 changes the first screen 400 illustrated in FIG. 4 to a second screen 500 illustrated in FIG. 5. FIG. 5 illustrates the screen 500 in which the entire view port of the display unit 140 is represented as a selected specific event processing area 520. A border line 510 of FIG. 5 can be displayed in a manner similar to the border line 310 of FIG. 3.

Accordingly, if a user's input signal based on a touch on the specific event processing area 520 is received, the controller 120 processes the input signal as an event of the specific event processing area 520. If a de-selection signal of a specific event processing area is received from the UI unit 110 while the screen 500 illustrated in FIG. 5 is being displayed on the display unit 140, the controller 120 can change the screen 500 displayed on the display unit 140 to the screen 400 illustrated in FIG. 4 to change the specific event processing area from a selected area to an unselected area.

The communication unit 130 of FIG. 1 can receive a web page from a web site by accessing wired or wireless Internet under control of the controller 120. The communication unit 130 according to embodiments of the present invention may also perform other communication functions including as a broadcasting reception function, a mobile communication function, a local area network function, and a position recognition communication function. Functions of the communication unit 130 are not limited to the functions described herein, and other such functions may be provided in accordance with embodiments of the present invention.

The display unit 140 displays a web browser executed by the controller 120 and displays a web page received via the communication unit 130 as described above. The display unit 140 may be a Liquid Crystal Display (LCD), a Thin Film Transistor LCD (TFT LCD), an Organic Light Emitting Diode (OLED), a flexible display, a 3 Dimensional (3D) display, etc.

The memory 150 stores an Operating System (OS) of the electronic device 100, application programs, such as a web browser, JAVASCRIPT®, FLASH®, and ACTIVEX® related software, and information needed to control the electronic device 100. The application programs, such as JAVASCRIPT®, FLASH®, and ACTIVEX® application programs, are programs for executing an event of a specific event processing area.

The memory 150 may be a flash memory type memory, a hard disc type memory, a multimedia card micro type memory, a card type memory (e.g. Secure Digital (SD) or eXtreme Digital (XD) memory), a Random Access Memory (RAM), a Static RAM (SRAM), a Read Only Memory (ROM), a magnetic memory, a magnetic disc, an optical disc, etc.

When the screen 200 illustrated in FIG. 2 is changed to the screen 300 illustrated in FIG. 3, or when the screen 300 illustrated in FIG. 3 is changed to the screen 200 illustrated in FIG. 2, the notification unit 160 notifies the user of this screen change. In addition, when the screen 400 illustrated in FIG. 4 is changed to the screen 500 illustrated in FIG. 5, or when the screen 500 illustrated in FIG. 5 is changed to the screen 400 illustrated in FIG. 4, the notification unit 160 notifies the user of this screen change. Notification can be performed using a vibration, voice, or alarm. However, notification methods are not limited to the vibration, voice, or alarm and other such methods may be used according to embodiments of the present invention.

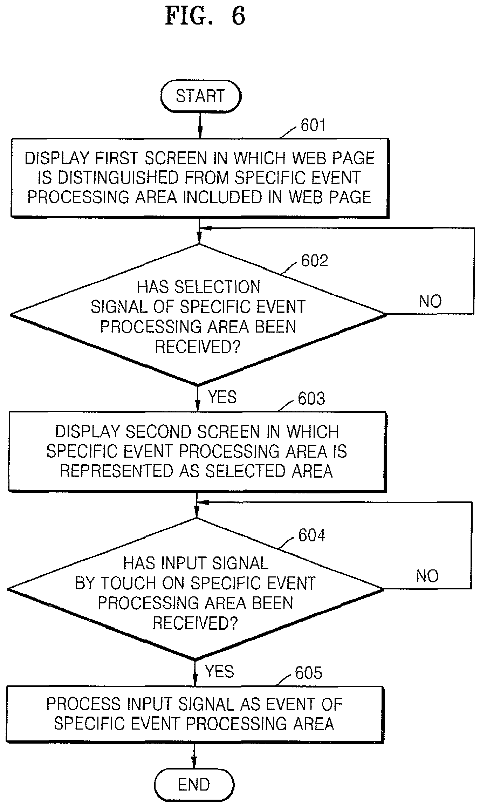

A method for providing a UI based on a touch interface according to an embodiment of the present invention is described as follows with reference to FIG. 6.

FIG. 6 is a flowchart of a UI method based on a touch interface, according to an embodiment of the present invention, which illustrates that a screen in which a web page is distinguished from a specific event processing area included in the web page is displayed, the specific event processing area is represented as a selected area, and an event according to an input signal based on a user's touch is processed.

During web browsing through the electronic device 100, a first screen in which a web page received by the electronic device 100 is distinguished from at least one specific event processing area included in the web page is displayed in step 601. In order to display the first screen, the controller 120 of the electronic device 100 parses the received web page as described herein with reference to FIG. 1 in order to determine whether a specific event processing area is included in the web page. Upon a determination that at least one specific event processing area is included in the web page, the controller 120 generates and displays the first screen to enable a user to intuitively recognize the at least one specific event processing area included in the web page as described herein with reference to FIG. 2 or 4.

If a selection signal of a specific event processing area has been received from the UI unit 110 in step 602, the controller 120 displays a second screen in which the at least one specific event processing area is represented as a selected area in step 603. Herein, the controller 120 may notify the user that the first screen has been changed to the second screen as described herein with reference to FIG. 1. A difference between the first screen and the second screen is as described herein with reference to FIGs. 2 to 5.

If an input signal corresponding to a user's touch on a specific event processing area has been received from the UI unit 110, in step 604, while the second screen is being displayed, the controller 120 processes the input signal as an event of the specific event processing area in step 605.

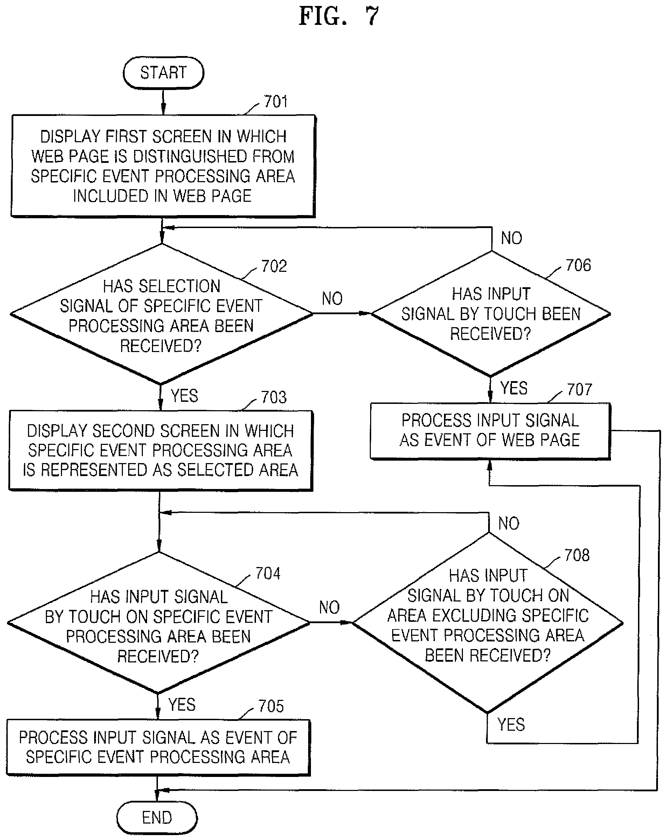

A method for providing a UI based on a touch interface according to another embodiment of the present invention is described as follows with reference to FIG. 7. FIG. 7 is a flowchart of a UI method based on a touch interface, according to another embodiment of the present invention, which adds an event processing function to the illustration of FIG. 6. Since steps 701 to 705 of FIG. 7 are identical to steps 601 to 605 of FIG. 6, respectively, a repeated description thereof will be omitted.

Referring to FIG. 7, if it is determined in step 702 that a selection signal of a specific event processing area has not been received, the controller 120 determines in step 706 whether an input signal by a touch has been received. If it is determined that an input signal corresponding to a user's touch has been received, the controller 120 processes the input signal as an event of the web page in step 707. If it is determined that an input signal corresponding to a user's touch has not been received, the controller 120 returns to step 702.

If it is determined, in step 704, that an input signal by a touch on a specific event processing area has not been received, the controller 120 determines in step 708 whether an input signal by a touch on an area excluding the at least one specific event processing area has been received. If it is determined in step 708 that an input signal by a touch on an area excluding the at least one specific event processing area has been received, the controller 120 proceeds to step 707 and processes the input signal as an event of the web page.

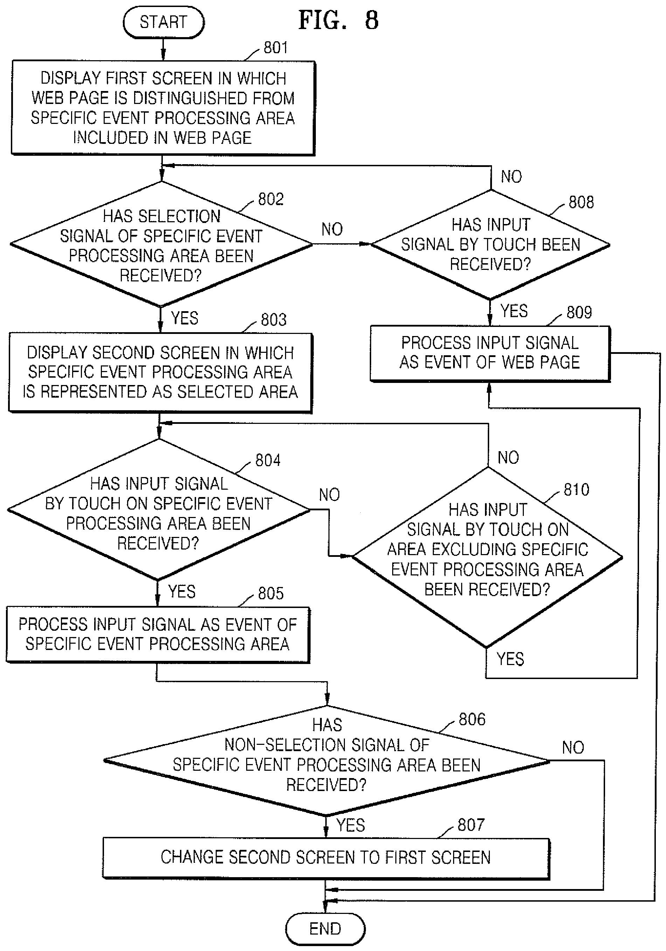

A method for providing a UI based on a touch interface according to another embodiment of the present invention is described as follows with reference to FIG. 8.

FIG. 8 is a flowchart of a UI method based on a touch interface, according to another embodiment of the present invention, which adds a function of changing a specific event processing area represented as a selected area to an unselected area to the illustration of FIG. 7. Thus, since steps 801 to 805 and 808 to 810 of FIG. 8 are identical to steps 701 to 705 and 706 to 708 of FIG. 7, repeated description thereof will be omitted here.

Referring to FIG. 8, if it is determined in step 806 that a de-selection signal of a specific event processing area has been received, the controller 120 changes the second screen to the first screen in step 807. Herein, the controller 120 can notify the user of the screen change as described herein with reference to FIG. 1. However, if it is determined in step 806 that a de-selection signal of a specific event processing area has not been received, the controller 120 maintains a display status of a screen in which the specific event processing area is represented as a selected area.

Programs for executing a UI method based on a touch interface according to embodiments of the present invention can also be embodied as computer readable codes on a computer readable recording medium. Computer readable recording mediums include data storage devices that can store data, which can be thereafter read by a computer system. Examples of the computer readable recording mediums include ROM, RAM, Compact Disc (CD)-ROMs, magnetic tapes, floppy disks, and optical data storage devices. The computer readable recording mediums according to embodiments of the present invention can also be distributed over network coupled computer systems so that the computer readable code is stored and executed in a distributed fashion.

While this invention has been particularly shown and described with reference to various embodiments thereof, it will be understood by those of ordinary skill in the art that various changes in form and details may be made therein without departing from the scope of the invention as defined by the appended claims. The described embodiments should be considered in a descriptive sense only and not for purposes of limitation. Therefore, the scope of the invention is defined not by the detailed description of the invention but by the appended claims.

## Claims

1. A method involving a User Interface, UI, on a touch interface, the method comprising:
receiving, when performing web browsing in an electronic device (100), a web page;
determining one or more areas of the web page as one or more specific event processing areas, **characterised in that**
when a specific event processing area (230, 420, 520) is a selected area, a user input can be performed in the specific event processing area and the input signal is processed based on a user's touch on the specific event processing area as an event of the specific event processing area, and
wherein, when a specific event processing area (230, 420, 520) is an unselected area, user input cannot be performed in the specific event processing area and the input signal is processed based on a user's touch on the specific event processing area as an event of the web page; wherein a controller (120) can set a selected area or an unselected area for each of the plurality of specific event processing areas (230, 420, 520); and the method further includes
displaying (601, 701, 801), as a first screen, the web page and the one or more specific event processing areas as unselected specific event processing areas, wherein the one or more specific event processing areas are distinguished from the remainder of the web page; and
displaying (603, 703, 803) a second screen in which at least one of the one or more specific event processing areas is displayed as a selected area, if a selection signal corresponding to the at least one specific event processing area is received, wherein a display status of a selected area specific event processing is different from a display status of an unselected specific event processing area.

2. The method of claim 1, further comprising if an input signal corresponding to a touch on the at least one specific event processing area of the second screen is received, processing the input signal as an event of the at least one specific event processing area.

3. The method of claim 1 or 2, further comprising if an input signal corresponding to a touch on the first screen is received, processing the input signal as an event of the web page.

4. The method of claim 1 or 2, wherein the displaying the second screen includes changing from displaying the first screen to displaying the second screen in response to a user input signal according to a tapping motion based user input signal or according to an action-based user input signal using a gyro sensor.

5. The method of claim 1 or 2, further comprising if a de-selection signal of the at least one specific event processing area is received while the second screen is being displayed, changing from displaying the second screen to displaying the first screen.

6. The method of claim 5, further comprising outputting a screen change notification to a user when changing from displaying the first screen to displaying the second screen or changing from displaying the second screen to displaying the first screen.

7. The method of claim 2, further comprising if an input signal corresponding to a touch on an area other than the at least one specific event processing area of the second screen is received, processing the input signal corresponding to the touch on the area other than the at least one specific event processing area of the second screen as a touch input to the web page not associated with a specific event processing area.

8. The method of claim 1 or 2, wherein the one or more specific event processing areas includes a specific object or a specific content area enabled to perform_a dynamic change.

9. A computer readable recording medium storing a computer readable program for executing a User Interface, UI, method based on a touch interface, the method comprising:
receiving, when performing web browsing in an electronic device (100), a web page;
determining one or more areas of the web page as one or more specific event processing areas, **characterised in that**
when a specific event processing area (230, 420, 520) is a selected area, a user input can be performed in the specific event processing area and the input signal is processed based on a user's touch on the specific event processing area as an event of the specific event processing area, and
wherein, when a specific event processing area (230, 420, 520) is an unselected area, user input cannot be performed in the specific event processing area and the input signal is processed based on a user's touch on the specific event processing area as an event of the web page; wherein a controller (120) can set a selected area or an unselected area for each of the plurality of specific event processing areas (230, 420, 520); and the method further includes
displaying (601, 701, 801), as a first screen, the web page and the one or more specific event processing areas as unselected specific event processing areas, wherein the one or more specific event processing areas are distinguished from the remainder of the web page; and
displaying (603, 703, 803) a second screen in which at least one of the one or more specific event processing areas is displayed as a selected area, if a selection signal corresponding to the at least one specific event processing area is received, wherein a display status of a selected area specific event processing is different from a display status of an unselected specific event processing area.

10. The computer readable recording medium of claim 9, further comprising if an input signal corresponding to a touch on the at least one specific event processing area of the second screen is received, processing the input signal as an event of the at least one specific event processing area.

11. An electronic device (100) including a web browsing function, the electronic device (100) comprising:
a display unit (140) for displaying a web page;
a User Interface, UI, (110) unit based on a touch interface; and
a controller (120) configured to
receive, when performing web browsing, a web page;
determine one or more areas of the web page as one or more specific event processing areas, **characterised in that**,
when a specific event processing area is a selected area (230, 420, 520), a user input can be performed in the specific event processing area and the controller (120) processes the input signal based on a user's touch on the specific event processing area as an event of the specific event processing area, and
wherein, when a specific event processing area (230, 420, 520) is an unselected area, user input cannot be performed in the specific event processing area and the controller (120) processes the input signal based on a user's touch on the specific event processing area as an event of the web page; wherein the controller (120) can set a selected area or an unselected area for each of the plurality of specific event processing areas (230, 420, 520); and the controller is further configured to
display, on the display unit (140), as a first screen the web page and the one or more specific event processing areas as unselected specific event processing areas, wherein the one or more specific event processing areas are distinguished from the remainder of the web page, and, if a selection signal corresponding to the at least one specific event processing area is received from the UI unit (110),
display a second screen in which at least one of the one or more specific event processing areas is displayed as a selected area on the display unit (140), wherein a display status of a selected area specific event processing is different from a display status of an unselected specific event processing area.

12. The electronic device of claim 11, wherein if an input signal corresponding to a touch on the at least one specific event processing area of the second screen is received from the UI unit, the controller processes the input signal as an event of the at least one specific event processing area.

13. The electronic device of claim 12, wherein if an input signal corresponding a touch on the first screen is received from the UI unit, the controller processes the input signal as an event of the web page.

14. The electronic device of claim 12, wherein if a de-selection signal of the at least one specific event processing area is received from the UI unit while the second screen is being displayed, the controller changes from displaying the second screen to displaying the first screen.

15. The electronic device of claim 11 or 12, wherein a display status of the at least one specific event processing area of the first screen is different from a display status of the at least one specific event processing area of the second screen.

16. The electronic device of claim 11 or 12, wherein if a de-selection signal of the at least one specific event processing area is received from the UI unit while the second screen is being displayed, the controller changes from displaying the second screen to displaying the first screen.

## Patentansprüche

1. Verfahren, eine Benutzerschnittstelle (UI) auf einer Berührungsschnittstelle involvierend, wobei das Verfahren Folgendes umfasst:
Empfangen, wenn Web-Browsing in einer elektronischen Vorrichtung (100) durchgeführt wird, einer Webseite;
Bestimmen eines oder mehrerer Bereiche der Webseite als ein oder mehrere spezifische ereignisverarbeitende Bereiche, **dadurch gekennzeichnet, dass**,
wenn ein spezifischer ereignisverarbeitender Bereich (230, 420, 520) ein ausgewählter Bereich ist, eine Benutzereingabe in dem spezifischen ereignisverarbeitenden Bereich durchgeführt werden kann und das Eingabesignal auf Grundlage einer Berührung eines Benutzers auf dem spezifischen ereignisverarbeitenden Bereich als ein Ereignis des spezifischen ereignisverarbeitenden Bereichs verarbeitet wird, und
wobei, wenn ein spezifischer ereignisverarbeitender Bereich (230, 420, 520) ein nicht ausgewählter Bereich ist, die Benutzereingabe nicht in dem spezifischen ereignisverarbeitenden Bereich durchgeführt werden kann und das Eingabesignal auf Grundlage einer Berührung eines Benutzers auf dem spezifischen ereignisverarbeitenden Bereich als ein Ereignis der Webseite verarbeitet wird; wobei eine Steuerung (120) einen ausgewählten Bereich oder einen nicht ausgewählten Bereich für jeden der Vielzahl von spezifischen ereignisverarbeitenden Bereichen (230, 420, 520) einstellen kann; und das Verfahren ferner Folgendes beinhaltet:
Anzeigen (601, 701, 801), als einen ersten Bildschirm, der Webseite und des einen oder der mehreren spezifischen ereignisverarbeitenden Bereiche als nicht ausgewählte spezifische ereignisverarbeitende Bereiche, wobei der eine oder die mehreren spezifischen ereignisverarbeitenden Bereiche von dem Rest der Webseite unterschieden werden; und
Anzeigen (603, 703, 803) eines zweiten Bildschirms, in dem mindestens einer des einen oder der mehreren spezifischen ereignisverarbeitenden Bereiche als ein ausgewählter Bereich angezeigt ist, falls ein Auswahlsignal, das dem mindestens einen spezifischen ereignisverarbeitenden Bereich entspricht, empfangen wird, wobei ein Anzeigestatus eines ausgewählten spezifischen ereignisverarbeitenden Bereichs sich von einem Anzeigestatus eines nicht ausgewählten spezifischen ereignisverarbeitenden Bereichs unterscheidet.

2. Verfahren nach Anspruch 1, ferner, falls ein Eingabesignal, das einer Berührung auf dem mindestens einen spezifischen ereignisverarbeitenden Bereich des zweiten Bildschirms entspricht, empfangen wird, das Verarbeiten des Eingabesignals als ein Ereignis des mindestens einen spezifischen ereignisverarbeitenden Bereichs umfassend.

3. Verfahren nach Anspruch 1 oder 2, ferner, falls ein Eingabesignal, das einer Berührung auf dem ersten Bildschirm entspricht, empfangen wird, das Verarbeiten des Eingabesignals als ein Ereignis der Webseite umfassend.

4. Verfahren nach Anspruch 1 oder 2, wobei das Anzeigen des zweiten Bildschirms das Wechseln von einem Anzeigen des ersten Bildschirms zu einem Anzeigen des zweiten Bildschirms als Reaktion auf ein Benutzereingabesignal gemäß einem Benutzereingabesignal, das auf Tippbewegung basiert, oder unter Verwendung eines Gyrosensors gemäß einem Benutzereingabesignal, das auf einer Handlung basiert, beinhaltet.

5. Verfahren nach Anspruch 1 oder 2, ferner, falls ein Abwählsignal des mindestens einen spezifischen ereignisverarbeitenden Bereichs empfangen wird, während der zweite Bildschirm angezeigt wird, das Wechseln von dem Anzeigen des zweiten Bildschirms zu dem Anzeigen des ersten Bildschirms umfassend.

6. Verfahren nach Anspruch 5, ferner das Ausgeben einer Bildschirmwechselbenachrichtigung an einen Benutzer umfassend, wenn von dem Anzeigen des ersten Bildschirms zu dem Anzeigen des zweiten Bildschirms gewechselt wird oder von dem Anzeigen des zweiten Bildschirms zu dem Anzeigen des ersten Bildschirms gewechselt wird.

7. Verfahren nach Anspruch 2, ferner, falls ein Eingabesignal, das einer Berührung auf einem anderen Bereich als dem mindestens einen spezifischen ereignisverarbeitenden Bereich des zweiten Bildschirms entspricht, empfangen wird, das Verarbeiten des Eingabesignals, das der Berührung auf dem anderen Bereich als dem mindestens einen spezifischen ereignisverarbeitenden Bereich des zweiten Bildschirms entspricht, als Berührungseingabe zu der Webseite umfassend, die nicht mit einem spezifischen ereignisverarbeitenden Bereich assoziiert ist.

8. Verfahren nach Anspruch 1 oder 2, wobei der eine oder die mehreren spezifischen ereignisverarbeitenden Bereiche ein spezifisches Objekt oder einen spezifischen Inhaltsbereich beinhalten, das/der dazu in der Lage ist, einen dynamischen Wechsel durchzuführen.

9. Computerlesbares Aufzeichnungsmedium, das ein computerlesbares Programm zum Ausführen eines Benutzerschnittstellen (UI)-Verfahrens auf Grundlage einer Berührungsschnittstelle speichert, wobei das Verfahren Folgendes umfasst:
Empfangen, wenn Web-Browsing in einer elektronischen Vorrichtung (100) durchgeführt wird, einer Webseite;
Bestimmen eines oder mehrerer Bereiche der Webseite als einen oder mehrere spezifische ereignisverarbeitende Bereiche, **dadurch gekennzeichnet, dass**,
wenn ein spezifischer ereignisverarbeitender Bereich (230, 420, 520) ein ausgewählter Bereich ist, eine Benutzereingabe in dem spezifischen ereignisverarbeitenden Bereich durchgeführt werden kann und das Eingabesignal auf Grundlage einer Berührung eines Benutzers auf dem spezifischen ereignisverarbeitenden Bereich als ein Ereignis des spezifischen ereignisverarbeitenden Bereichs verarbeitet wird, und
wobei, wenn ein spezifischer ereignisverarbeitender Bereich (230, 420, 520) ein nicht ausgewählter Bereich ist, die Benutzereingabe nicht in dem spezifischen ereignisverarbeitenden Bereich durchgeführt werden kann und das Eingabesignal auf Grundlage einer Berührung eines Benutzers auf dem spezifischen ereignisverarbeitenden Bereich als ein Ereignis der Webseite verarbeitet wird; wobei eine Steuerung (120) einen ausgewählten Bereich oder einen nicht ausgewählten Bereich für jeden der Vielzahl von spezifischen ereignisverarbeitenden Bereichen (230, 420, 520) einstellen kann; und das Verfahren ferner Folgendes beinhaltet:
Anzeigen (601, 701, 801), als einen ersten Bildschirm, der Webseite und des einen oder der mehreren spezifischen ereignisverarbeitenden Bereiche als nicht ausgewählte spezifische ereignisverarbeitende Bereiche, wobei der eine oder die mehreren spezifischen ereignisverarbeitenden Bereiche von dem Rest der Webseite unterschieden werden; und
Anzeigen (603, 703, 803) eines zweiten Bildschirms, in dem mindestens einer des einen oder der mehreren spezifischen ereignisverarbeitenden Bereiche als ein ausgewählter Bereich angezeigt ist, falls ein Auswahlsignal, das dem mindestens einen spezifischen ereignisverarbeitenden Bereich entspricht, empfangen wird, wobei ein Anzeigestatus eines ausgewählten spezifischen ereignisverarbeitenden Bereichs sich von einem Anzeigestatus eines nicht ausgewählten spezifischen ereignisverarbeitenden Bereichs unterscheidet.

10. Computerlesbares Aufzeichnungsmedium nach Anspruch 9, ferner, falls ein Eingabesignal, das einer Berührung auf dem mindestens einen spezifischen ereignisverarbeitenden Bereich des zweiten Bildschirms entspricht, empfangen wird, das Verarbeiten des Eingabesignals als ein Ereignis des mindestens einen spezifischen ereignisverarbeitenden Bereichs umfassend.

11. Elektronische Vorrichtung (100), die eine Web-Browsing-Funktion beinhaltet, wobei die elektronische Vorrichtung (100) Folgendes umfasst:
eine Anzeigeeinheit (140) zum Anzeigen einer Webseite;
eine Benutzerschnittstellen (UI)(110)-Einheit auf Grundlage einer Berührungsschnittstelle; und
eine Steuerung (120), die zu Folgendem konfiguriert ist:
Empfangen, wenn Web-Browsing durchgeführt wird, einer Webseite;
Bestimmen eines oder mehrerer Bereiche der Webseite als einen oder mehrere spezifische ereignisverarbeitende Bereiche, **dadurch gekennzeichnet, dass**,
wenn ein spezifischer ereignisverarbeitender Bereich ein ausgewählter Bereich (230, 420, 520) ist, eine Benutzereingabe in dem spezifischen ereignisverarbeitenden Bereich durchgeführt werden kann und die Steuerung (120) das Eingabesignal auf Grundlage einer Berührung eines Benutzers auf dem spezifischen ereignisverarbeitenden Bereich als ein Ereignis des spezifischen ereignisverarbeitenden Bereichs verarbeitet, und
wobei, wenn ein spezifischer ereignisverarbeitender Bereich (230, 420, 520) ein nicht ausgewählter Bereich ist, die Benutzereingabe nicht in dem spezifischen ereignisverarbeitenden Bereich durchgeführt werden kann und die Steuerung (120) das Eingabesignal auf Grundlage einer Berührung eines Benutzers auf dem spezifischen ereignisverarbeitenden Bereich als ein Ereignis der Webseite verarbeitet; wobei die Steuerung (120) einen ausgewählten Bereich oder einen nicht ausgewählten Bereich für jeden der Vielzahl von spezifischen ereignisverarbeitenden Bereichen (230, 420, 520) einstellen kann; und die Steuerung ferner zu Folgendem konfiguriert ist:
Anzeigen, auf der Anzeigeeinheit (140), als einen ersten Bildschirm, der Webseite und des einen oder der mehreren spezifischen ereignisverarbeitenden Bereiche als nicht ausgewählte spezifische ereignisverarbeitende Bereiche, wobei der eine oder die mehreren spezifischen ereignisverarbeitenden Bereiche von dem Rest der Webseite unterschieden werden, und, falls ein Auswahlsignal, das dem mindestens einen spezifischen ereignisverarbeitenden Bereich entspricht, von der UI-Einheit (110) empfangen wird,
Anzeigen eines zweiten Bildschirms, in dem mindestens einer des einen oder der mehreren spezifischen ereignisverarbeitenden Bereiche als ein ausgewählter Bereich auf der Anzeigeeinheit (140) angezeigt wird, wobei ein Anzeigestatus eines ausgewählten spezifischen ereignisverarbeitenden Bereichs sich von einem Anzeigestatus eines nicht ausgewählten spezifischen ereignisverarbeitenden Bereichs unterscheidet.

12. Elektronische Vorrichtung nach Anspruch 11, wobei, falls ein Eingabesignal, das einer Berührung auf dem mindestens einen spezifischen ereignisverarbeitenden Bereich des zweiten Bildschirms entspricht, von der UI-Einheit empfangen wird, die Steuerung das Eingabesignal als ein Ereignis des mindestens einen spezifischen ereignisverarbeitenden Bereichs verarbeitet.

13. Elektronische Vorrichtung nach Anspruch 12, wobei, falls ein Eingabesignal, das einer Berührung auf dem ersten Bildschirm entspricht, von der UI-Einheit empfangen wird, die Steuerung das Eingabesignal als ein Ereignis der Webseite verarbeitet.

14. Elektronische Vorrichtung nach Anspruch 12, wobei, falls ein Abwählsignal des mindestens einen spezifischen ereignisverarbeitenden Bereichs von der UI-Einheit empfangen wird, während der zweite Bildschirm angezeigt wird, die Steuerung von dem Anzeigen des zweiten Bildschirms zu dem Anzeigen des ersten Bildschirms wechselt.

15. Elektronische Vorrichtung nach Anspruch 11 oder 12, wobei ein Anzeigestatus des mindestens einen spezifischen ereignisverarbeitenden Bereichs des ersten Bildschirms sich von einem Anzeigestatus des mindestens einen spezifischen ereignisverarbeitenden Bereichs des zweiten Bildschirms unterscheidet.

16. Elektronische Vorrichtung nach Anspruch 11 oder 12, wobei, falls ein Abwählsignal des mindestens einen spezifischen ereignisverarbeitenden Bereichs von der UI-Einheit empfangen wird, während der zweite Bildschirm angezeigt wird, die Steuerung von dem Anzeigen des zweiten Bildschirms zu dem Anzeigen des ersten Bildschirms wechselt.

## Revendications

1. Procédé impliquant une interface utilisateur (UI) sur une interface tactile, le procédé comprenant :
la réception, lors de l'exécution d'une navigation sur Internet dans un dispositif électronique (100), d'une page Internet ;
la détermination d'une ou plusieurs zones de la page Internet en tant qu'une ou plusieurs zones de traitement d'événement spécifiques, **caractérisé en ce que**
lorsqu'une zone de traitement d'événement spécifique (230, 420, 520) est une zone sélectionnée, une entrée utilisateur peut être effectuée dans la zone de traitement d'événement spécifique et le signal d'entrée est traité en fonction d'un toucher d'un utilisateur sur la zone de traitement d'événement spécifique en tant qu'événement de la zone de traitement d'événement spécifique, et
dans lequel, lorsqu'une zone de traitement d'événement spécifique (230, 420, 520) est une zone non sélectionnée, une entrée utilisateur ne peut pas être effectuée dans la zone de traitement d'événement spécifique et le signal d'entrée est traité en fonction d'un toucher d'un utilisateur sur la zone de traitement d'événement spécifique en tant qu'événement de la page Internet ; dans lequel un dispositif de commande (120) peut fixer une zone sélectionnée ou une zone non sélectionnée pour chacune de la pluralité de zones de traitement d'événement spécifiques (230, 420, 520) ; et le procédé comprend en outre
l'affichage (601, 701, 801), en tant que premier écran, de la page Internet et desdites une ou plusieurs zones de traitement d'événement spécifiques en tant que zones de traitement d'événement spécifiques non sélectionnées, lesdites une ou plusieurs zones de traitement d'événement spécifiques se distinguant du reste de la page Internet ; et
l'affichage (603, 703, 803) d'un second écran dans lequel au moins l'une desdites une ou plusieurs zones de traitement d'événement spécifiques est affichée en tant que zone sélectionnée, si un signal de sélection correspondant à ladite au moins une zone de traitement d'événement spécifique est reçu, dans lequel un statut d'affichage d'une zone de traitement d'événement spécifique sélectionnée est différent d'un statut d'affichage d'une zone de traitement d'événement spécifique non sélectionnée.

2. Procédé selon la revendication 1, comprenant en outre si un signal d'entrée correspondant à un toucher sur ladite au moins une zone de traitement d'événement spécifique du second écran est reçu, le traitement du signal d'entrée en tant qu'événement de ladite au moins une zone de traitement d'événement spécifique.

3. Procédé selon la revendication 1 ou 2, comprenant en outre si un signal d'entrée correspondant à un toucher sur ledit premier écran est reçu, le traitement du signal d'entrée en tant qu'événement de la page Internet.

4. Procédé selon la revendication 1 ou 2, ledit affichage du second écran comprenant un changement d'affichage du premier écran pour afficher le second écran en réponse à un signal d'entrée utilisateur selon un signal d'entrée d'utilisateur basé sur un mouvement de tapotement ou selon un signal d'entrée d'utilisateur basé sur une action à l'aide d'un capteur gyroscopique.

5. Procédé selon la revendication 1 ou 2, comprenant en outre si un signal de désélection de ladite au moins une zone de traitement d'événement spécifique est reçu pendant l'affichage du second écran, le passage de l'affichage du second écran à l'affichage du premier écran.

6. Procédé selon la revendication 5, comprenant en outre la sortie d'une notification de changement d'écran vers un utilisateur lors du passage de l'affichage du premier écran à l'affichage du second écran ou du passage de l'affichage du second écran à l'affichage du premier écran.

7. Procédé selon la revendication 2, comprenant en outre si un signal d'entrée correspondant à un toucher sur une zone différente de ladite au moins une zone de traitement d'événement spécifique du second écran est reçu, le traitement du signal d'entrée correspondant au toucher sur la zone différente de ladite au moins une zone de traitement d'événement spécifique du second écran en tant qu'entrée tactile vers la page Internet non associée à une zone de traitement d'événement spécifique.

8. Procédé selon la revendication 1 ou 2, lesdites une ou plusieurs zones de traitement d'événement spécifiques comprenant un objet spécifique ou une zone de contenu spécifique activée pour effectuer un changement dynamique.

9. Support d'enregistrement lisible par ordinateur stockant un programme lisible par ordinateur pour exécuter un procédé d'interface utilisateur (UI) basé sur une interface tactile, le procédé comprenant :
la réception, lors de l'exécution d'une navigation sur Internet dans un dispositif électronique (100), d'une page Internet ;
la détermination d'une ou plusieurs zones de la page Internet en tant qu'une ou plusieurs zones de traitement d'événement spécifiques, **caractérisé en ce que**
lorsqu'une zone de traitement d'événement spécifique (230, 420, 520) est une zone sélectionnée, une entrée utilisateur peut être effectuée dans la zone de traitement d'événement spécifique et le signal d'entrée est traité en fonction d'un toucher d'un utilisateur sur la zone de traitement d'événement spécifique en tant qu'événement de la zone de traitement d'événement spécifique ; et
dans lequel, lorsqu'une zone de traitement d'événement spécifique (230, 420, 520) est une zone non sélectionnée, une entrée utilisateur ne peut pas être effectuée dans la zone de traitement d'événement spécifique et le signal d'entrée est traité en fonction d'un toucher d'un utilisateur sur la zone de traitement d'événement spécifique en tant qu'événement de la page Internet ; dans lequel un dispositif de commande (120) peut fixer une zone sélectionnée ou une zone non sélectionnée pour chacune de la pluralité de zones de traitement d'événement spécifiques (230, 420, 520) ; et le procédé comprend en outre
l'affichage (601, 701, 801), en tant que premier écran, de la page Internet et desdites une ou plusieurs zones de traitement d'événement spécifiques en tant que zones de traitement d'événement spécifiques non sélectionnées, lesdites une ou plusieurs zones de traitement d'événement spécifiques se distinguant du reste de la page Internet ; et
l'affichage (603, 703, 803) d'un second écran dans lequel au moins l'une desdites une ou plusieurs zones de traitement d'événement spécifiques est affichée en tant que zone sélectionnée, si un signal de sélection correspondant à ladite au moins une zone de traitement d'événement spécifique est reçu, dans lequel un statut d'affichage d'une zone de traitement d'événement spécifique sélectionnée est différent d'un statut d'affichage d'une zone de traitement d'événement spécifique non sélectionnée.

10. Support d'enregistrement lisible par ordinateur selon la revendication 9, comprenant en outre si un signal d'entrée correspondant à un toucher sur ladite au moins une zone de traitement d'événement spécifique du second écran est reçu, le traitement du signal d'entrée en tant qu'événement de ladite au moins une zone de traitement d'événement spécifique.

11. Dispositif électronique (100) comprenant une fonction de navigation sur Internet, le dispositif électronique (100) comprenant :
une unité d'affichage (140) pour afficher une page Internet ;
une unité d'interface utilisateur (UI) (110) basée sur une interface tactile ; et
un dispositif de commande (120) configuré pour
recevoir, lors de l'exécution d'une navigation sur Internet, une page Internet ;
déterminer une ou plusieurs zones de la page Internet en tant qu'une ou plusieurs zones de traitement d'événement spécifiques, **caractérisé en ce que**,
lorsqu'une zone de traitement d'événement spécifique est une zone sélectionnée (230, 420, 520), une entrée utilisateur peut être effectuée dans la zone de traitement d'événement spécifique et le dispositif de commande (120) traite le signal d'entrée en fonction d'un toucher d'un utilisateur sur la zone de traitement d'événement spécifique en tant qu'événement de la zone de traitement d'événement spécifique, et
dans lequel, lorsqu'une zone de traitement d'événement spécifique (230, 420, 520) est une zone non sélectionnée, une entrée utilisateur ne peut pas être effectuée dans la zone de traitement d'événement spécifique et le dispositif de commande (120) traite le signal d'entrée en fonction d'un toucher d'un utilisateur sur la zone de traitement d'événement spécifique en tant qu'événement de la page Internet ; ledit dispositif de commande (120) pouvant fixer une zone sélectionnée ou une zone non sélectionnée pour chacune de la pluralité de zones de traitement d'événement spécifiques (230, 420, 520) ; et ledit dispositif de commande étant en outre configuré pour
afficher, sur l'unité d'affichage (140), en tant que premier écran, la page Internet et lesdites une ou plusieurs zones de traitement d'événement spécifiques en tant que zones de traitement d'événement spécifiques non sélectionnées, lesdites une ou plusieurs zones de traitement d'événement spécifiques se distinguant du reste de la page Internet, et, si un signal de sélection correspondant à ladite au moins une zone de traitement d'événement spécifique est reçu en provenance de l'unité UI (110),
afficher un second écran dans lequel au moins l'une desdites une ou plusieurs zones de traitement d'événement spécifiques est affichée en tant que zone sélectionnée sur l'unité d'affichage (140), un statut d'affichage d'une zone de traitement d'événement spécifique sélectionnée étant différent d'un statut d'affichage d'une zone de traitement d'événement spécifique non sélectionnée.

12. Dispositif électronique selon la revendication 11, dans lequel si un signal d'entrée correspondant à un toucher sur ladite au moins une zone de traitement d'événement spécifique du second écran est reçu en provenance de l'unité UI, le dispositif de commande traite le signal d'entrée en tant qu'événement de ladite au moins une zone de traitement d'événement spécifique.

13. Dispositif électronique selon la revendication 12, dans lequel si un signal d'entrée correspondant à un toucher sur le premier écran est reçu en provenance de l'unité UI, le dispositif de commande traite le signal d'entrée en tant qu'événement de la page Internet.

14. Dispositif électronique selon la revendication 12, dans lequel si un signal de désélection de ladite au moins une zone de traitement d'événement spécifique est reçu en provenance de l'unité UI pendant l'affichage du second écran, le dispositif de commande passe de l'affichage du second écran à l'affichage du premier écran.

15. Dispositif électronique selon la revendication 11 ou 12, dans lequel un statut d'affichage de ladite au moins une zone de traitement d'événement spécifique du premier écran est différent d'un statut d'affichage de ladite au moins une zone de traitement d'événement spécifique du second écran.

16. Dispositif électronique selon la revendication 11 ou 12, dans lequel si un signal de désélection de ladite au moins une zone de traitement d'événement spécifique est reçu en provenance de l'unité UI pendant l'affichage du second écran, le dispositif de commande passe de l'affichage du second écran à l'affichage du premier écran.
